# EUROPÄISCHE PATENTSCHRIFT

(11) **EP 1 536 033 B1**
(45) Veröffentlichungstag und Bekanntmachung des Hinweises auf die Patenterteilung: **24.01.2007**
(21) Anmeldenummer: 03027389.0
(22) Anmeldetag: 27.11.2003
(51) Int. Cl.: C23C 10/08, C23C 10/18, C23C 10/48, C23C 10/30

(54) **Gasphasenbeschichtungsverfahren**
Vapour phase deposition
Dépôt en phase vapeur

(43) Veröffentlichungstag der Anmeldung: 01.06.2005
(73) Patentinhaber: SIEMENS AKTIENGESELLSCHAFT, 80333 München (DE)
(72) Erfinder: Kaiser, Axel, Dr., 41462 Neuss (DE); Krüger, Ursus, Dr., 14089 Berlin (DE); Reiche, Ralph, 13465 Berlin (DE); Steinbach, Jan, Dr., 13353 Berlin (DE)

(56) Entgegenhaltungen:
- EP-A- 0 984 074
- EP-A- 1 186 680
- WO-A-94/26948
- US-A- 5 100 486

## Beschreibung

Die Erfindung betrifft ein Gasphasenbeschichtungsverfahren gemäss Anspruch 1.

Als Gasphasenbeschichtungsverfahren sind die CVD- oder PVD-Verfahren bekannt.
Dabei ist ein zu beschichtendes Bauteil und ein Quellmaterial, das verdampft wird, in einer aufwändigen Vakuumanlage vorhanden. Das Quellmaterial wird mittels entsprechender Mittel verdampft (Laser-, Elektronenstrahlen) oder als Gasprodukt zugeführt und bildet eine Dampfwolke, die sich in einer Richtung zum Bauteil hin ausbreitet und sich dort als Beschichtung niederschlägt.

Wenn nicht nur eine Seite eines Bauteils beschichtet werden soll, so muss das Bauteil während der Beschichtung gedreht werden. Dies kann kontinuierlich oder diskontinuierlich erfolgen. In jedem Fall ist jedoch eine aufwändige mechanische Stellvorrichtung innerhalb der Vakuumanlage notwendig, um dies zu ermöglichen.

Aus der US-PS 6,217,668 ist bekannt, ein Bauteil in einem großen Tiegel unterzubringen, wobei das Bauteil in einem Pulverbett mit einer Aluminiumquelle angeordnet ist. Der Tiegel muss teilweise abgeschlossen und dann in einem Ofen erwärmt werden. Durch den Wärmeprozess wird dem korrodierten Bauteil Aluminium zugeführt.
Für das Pulverbett wird viel Material benötigt und der Tiegel beansprucht viel Raum im Ofen während dieser Wärmebehandlung. Der Wärmeprozess dauert auch wegen der großen Wärmekapazität des Tiegels lange.

Außerdem ist es bekannt, metallhaltige Pasten oder Schlicker auf einem Bauteil aufzutragen und durch Aufheizen mindestens über die Schmelztemperatur eine Beschichtung mit dem Metall zu erreichen. Das Metall schmilzt ganz auf. Solche Pasten müssen gleichmäßig auf das Bauteil aufgetragen werden, da sich sonst eine ungleichmäßige Beschichtung ergibt. Überschüssige Reste der Paste lassen sich schlecht entfernen, da es sich um fest zusammen geschmolzene Beschichtungen handelt.

Die US 6,569,492 offenbart das Aluminisieren oder Chromieren eines Bauteils.

Soll eine lokale Beschichtung erfolgen, so ist eine aufwändige Maskierung des Bauteils notwendig.

Es ist daher Aufgabe der Erfindung ein Gasphasenbeschichtungsverfahren aufzuzeigen, das einfacher, d.h. mit weniger apparativem Aufwand, durchzuführen ist.

Die Aufgabe wird gelöst durch ein Gasphasenbeschichtungsverfahren gemäss Anspruch 1.

In den Unteransprüchen sind weitere vorteilhafte Verfahrensschritte aufgelistet.
Die in den Unteransprüchen aufgelisteten Verfahrensschritte können in vorteilhafter Art und Weise miteinander verknüpft werden.

### Es zeigen

- Figuren 1 bis 4: Verfahrensschritte des erfindungsgemäßen Verfahrens,
- Figur 5: ein Anwendungsbeispiel des erfindungsgemäßen Verfahrens,
- Figur 6: eine Gasturbine,
- Figur 7: eine Dampfturbine,
- Figur 8: eine Turbinenschaufel.

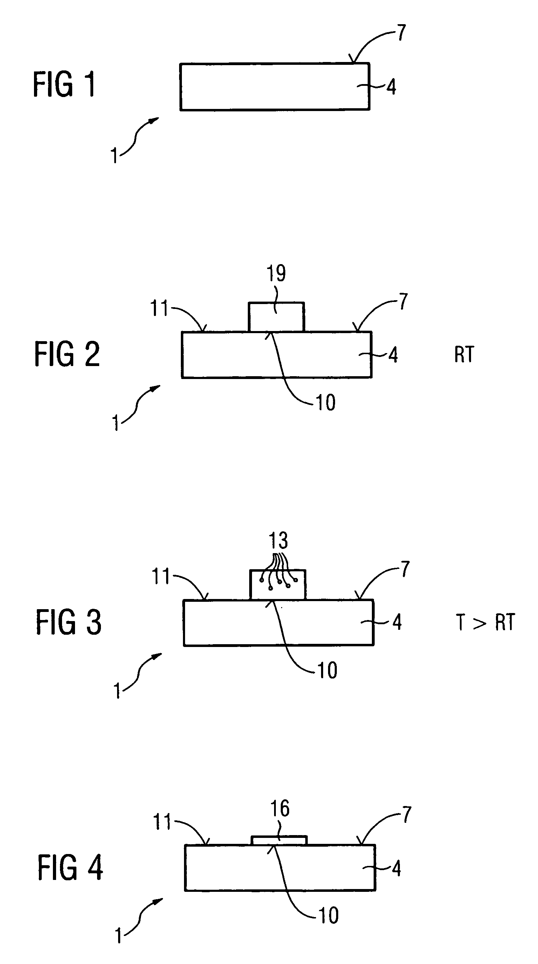

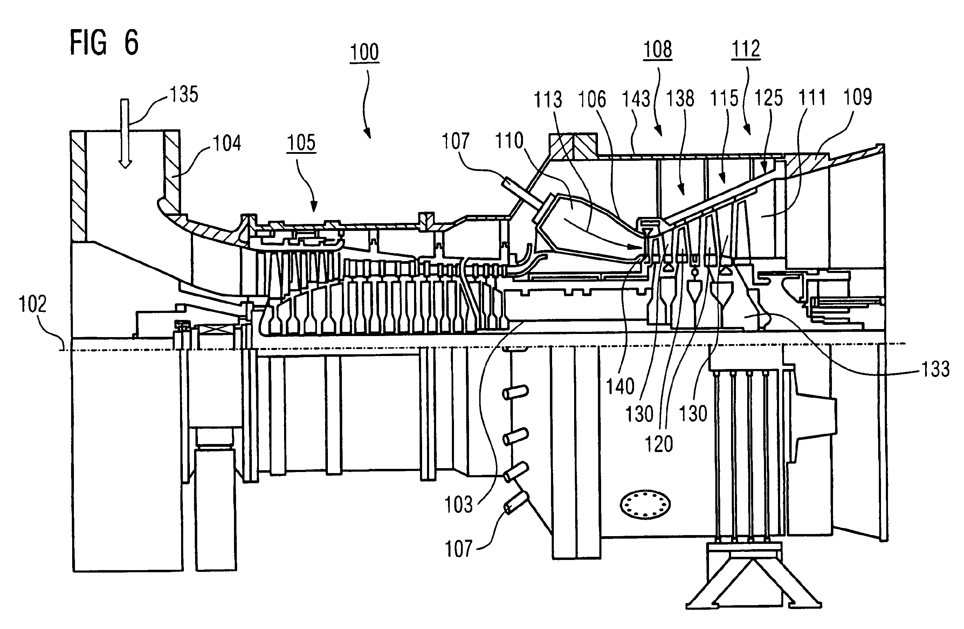

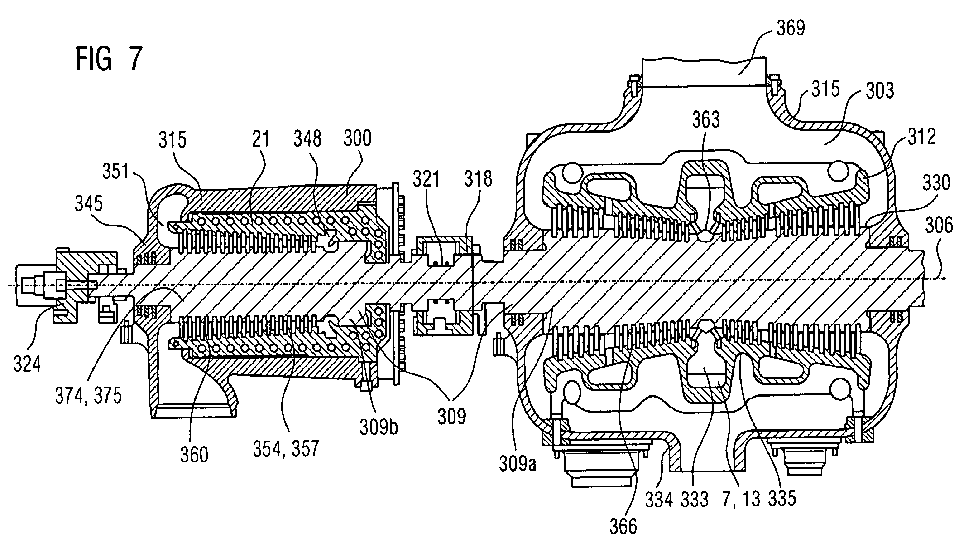

Figur 1 zeigt ein Bauteil 1, das mit dem erfindungsgemäßen Gasphasenbeschichtungsverfahren beschichtet werden soll.
Das Bauteil 1 weist ein Substrat 4 mit einer Oberfläche 7 auf, die zumindest teilweise beschichtet werden soll.
Das Substrat 4 kann metallisch oder keramisch sein.
Das Bauteil 1 ist insbesondere ein Bauteil 1 einer Strömungsmaschine, also einer Gasturbine eines Flugzeugs oder einer Anlage zur Erzeugung elektrischen Stroms 100 (Fig. 6), einer Dampfturbine 300, 3003 (Fig. 7) oder eines Kompressors (beispielsweise 105, Fig. 6).
Insbesondere ist das Bauteil 1 eine Turbinenschaufel 120, 130, 342, 354 (Fig. 6, 7) oder eine Brennkammerauskleidung 155 (Fig. 6).
Die thermisch hochbelasteten Bauteile einer Strömungsmaschine bestehen insbesondere aus einer eisen-, kobalt- oder nickelbasierten Superlegierung.
Das erfindungsgemäße Beschichtungsverfahren kann bei neu hergestellten Bauteilen oder wieder aufzuarbeitenden Bauteilen 1 angewendet werden.

Figur 2 zeigt einen Verfahrensschritt des erfindungsgemäßen Verfahrens.
Auf die gesamte Oberfläche 7 oder nur auf einen lokal begrenzten Bereich 10 der Oberfläche 7 wird ein mehrkomponentiges Auftragsmittel 19 in Form einer Schicht mittels eines Schlickers 19 oder einer Paste 19 aufgetragen.
Im folgenden wird beispielhaft von einem Schlicker 19 gesprochen.
Der Schlicker 19 kann bei Raumtemperatur aufgetragen werden. Die Haftung des Schlickers 19 auf dem Bauteil 1 kann dadurch erfolgen, dass der Schlicker 19 einen Binder (beispielsweise organisch oder anorganisch) enthält.
Der Schlicker 19 kann auch mit einer Trägerflüssigkeit (Wasser, Alkohol,..) mit oder ohne Binder vermischt werden und auf das Bauteil 1 aufgepinselt werden oder das Bauteil 1 wird durch Eintauchen in eine fließfähige Masse des Schlickers 19 beschichtet.
Eine lokal begrenzte Aufbringung ist in jedem Fall möglich.

Der Schlicker 19 enthält einen Aktivator und zumindest einen Bestandteil des Beschichtungsmaterials, das eine Schicht 16 (Fig. 4) auf der Oberfläche 7, 10 bilden soll.
Der Aktivator kann mit zumindest einem Bestandteil des Auftragsmittels zu einem Gas 13 (Fig. 3) reagieren, das sich auf der Oberfläche 7, 10 niederschlägt. Dieser Prozess ist in der US 6,217,668 beschrieben, die Bestandteil dieser Offenbarung sein soll.
Diese Reaktion erfolgt erst ab einer erhöhten Temperatur.

Figur 3 zeigt einen weiteren Verfahrensschritt des erfindungsgemäßen Verfahrens.
Die Temperatur des Schlickers 19 und beispielsweise die des Substrats 4 wird so erhöht, dass in dem Schlicker 19 eine Reaktion von Aktivator und einem Bestandteil des Schlickers 19, d.h. des Auftragsmittels stattfindet. Dadurch bilden sich gasförmige Teilchen 13. Durch die Reaktion des Aktivators mit einem Bestandteil des Schlickers 19 wird kein Material aufgeschmolzen, so dass die Prozesstemperatur und damit Prozesskosten entsprechend niedriger gehalten werden können.
Als billigen und einfach verfügbaren Aktivator verwendet man vorteilhafterweise Halogene (Fluor und/oder Chlor oder sonstige Gase), das mit Aluminium als beispielhaftes Beschichtungsmaterial Aluminiumchlorid bildet oder Halogenverbindungen Aluminiumchlorid.
Wenn Aluminiumfluorid (AlF) verwendet wird, bilden das Beschichtungsmaterial (Aluminium) und der Aktivator (F) eine Verbindung.
Die Bildungsrate des Gases 13 kann kontrolliert werden, in dem man dem Schlicker 19 eine Trägersubstanz, beispielsweise ein chemisch inertes Material, etwa eine Keramik, insbesondere Aluminiumoxid oder Aluminiumsilikat, beimischt, wodurch die Bildung des Gases 13 kontrolliert und vergleichmäßigt wird.
Erst durch Erreichen der Reaktionstemperatur, die unterhalb der Schmelztemperatur des zumindest einen Bestandteils des Schlickers 19 liegt, wird die Reaktion und damit die Gasphasenbeschichtung gestartet.
Durch Unterschreiten der Reaktionstemperatur wird der Prozess der Gasphasenbildung und dadurch auch das Beschichtungsverfahren selbst gestoppt. Dadurch ist die Beschichtung und Kontrolle (Schichtdicke) des Verfahrens mit hoher Präzision gewährleistet.
Auch wenn der Schlicker 19 ungleichmäßig aufgetragen sein sollte, erfolgt eine gleichmäßige Beschichtung, da sich die Schichtdicke bestimmt aus dem Anteil der Gasphase, die sich aufgrund ihres Aggregatszustands gleichmäßig verteilt. Im übrigen hängt die Schichtdicke von der Verweildauer des Bauteils 1 oberhalb der Reaktionstemperatur ab.
Nach einer bestimmten Zeit kann der Prozess gestoppt werden und gegebenenfalls vorhandene Reste des Schlickers 19 werden entfernt.
Übrig bleibt dann eine gewünschte Beschichtung 16 (Figur 4). Durch eine Diffusionsbehandlung kann die Anbindung der Schicht 16 an das Substrat 4 verbessert werden. Dabei diffundiert Material der Schicht 16 in das Substrat 4.
Eine einfach aufzubringende und entfernbare Maskierung der nicht zu beschichtenden Flächen 11 ist möglich.

Der Schlicker 19 kann als Beschichtungsmaterial ein Metall und/oder eine Keramik, wie z.B. Aluminium, Kobalt, Chrom, Nickel, Silizium oder Zirkonoxid enthalten. Ebenso kann der Schlicker 19 zwei Beschichtungsmaterialien enthalten, die abgeschieden werden sollen. Dies ist z.B. Aluminium und Kobalt, oder Nickel und Kobalt, Kobalt und Chrom oder Aluminium und Chrom.
Ebenso kann eine Legierung, wie z.B. eine MCrAlX-Legierung in dem Schlicker 19 vorhanden sein und abgeschieden werden.

Ein Metall oder eine Legierung kann in Form eines Metallkomplexes in dem Schlicker 19 vorhanden sein.

Das Bauteil 1 muss für die Beschichtung in einen Ofen eingeführt werden, in dem die Temperatur erhöht werden kann. Ein Vakuum muss nicht notwendigerweise vorhanden sein. Gegebenenfalls kann ein Reaktivgas in den Ofen oder in das Vakuum eingeführt werden, um ein reaktives Gasphasenabscheidungsverfahren auszunutzen. So kann z.B. Aluminium mit Sauerstoff als Reaktivgas zu gasförmigem Aluminiumoxid reagieren, das sich dann als Aluminiumoxidschicht auf dem Bauteil 1 abscheidet oder das Reaktivgas reagiert mit dem abgeschiedenen metallischen Aluminium zu Aluminiumoxid und bildet ebenfalls ein Aluminiumoxidschicht auf dem Bauteil 1.

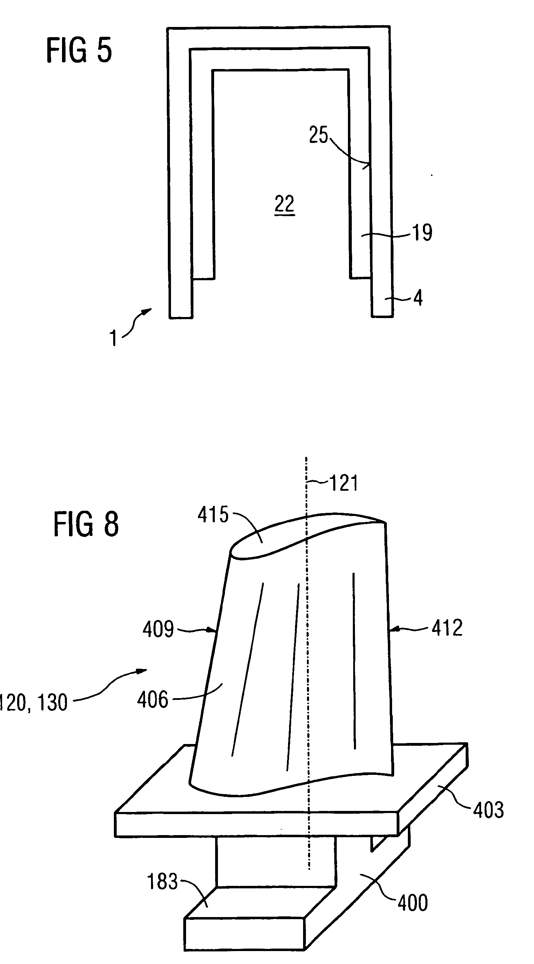

Figur 5 zeigt ein Anwendungsbeispiel für das erfindungsgemäße Verfahren.
Das Bauteil ist hier ein hohles Bauteil 1', wie es beispielsweise bei innen gekühlten Turbinenschaufeln gegeben ist. Eine Gasphase insbesondere in einem CVD- oder PVD-Verfahren nach dem Stand der Technik kann nur schlecht in das Innere des Bauteils 1' eindringen.
Mit dem erfindungsgemäßen Verfahren wird dieser Nachteil dadurch überwunden, dass der Schlicker 19 durch Eingießen oder einfaches Auftragen auf die Innenfläche 25 des Bauteils 1 aufgebracht wird. Durch eine Wärmebehandlung erfolgt eine Innenbeschichtung.
Die ggf. vorhandenen Reste des Schlickers 19 können durch einfaches Wasserstrahlen, Luftstrahlen und Trockeneisstrahlen entfernt werden.
Somit werden auch schwer zugängliche Bereiche eines hohlen Bauteils 1' sowie auch Hinterschneidungen oder schwer zugängliche Stellen an einer Oberfläche des Bauteils beschichtet.

Die Figur 6 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120.

An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1204776, EP 1306454, EP 1319729, WO 99/67435 oder WO 00/44949 bekannt; diese Schriften sind Teil der Offenbarung der vorliegenden Erfindung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden) und Wärme durch eine Wärmedämmschicht aufweisen.
Als Beschichtungsverfahren kann das erfindungsgemäße Beschichtungsverfahren verwendet werden.
Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Als Beschichtungsverfahren kann aber auch das erfindungsgemäße Beschichtungsverfahren verwendet werden.

Die Turbinenschaufel 120, 130 weisen eine Innenalitierung auf, die mittels des erfindungsgemäßen Beschichtungsverfahrens erzeugt werden kann.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

In Figur 7 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließendes Außengehäuse 315 auf.
Die Hochdruck-Teilturbine 300 ist beispielsweise in Topfbauart ausgeführt.
Die Mitteldruck-Teilturbine 303 ist zweiflutig ausgeführt.
Es ist ebenfalls möglich, dass die Mitteldruck-Teilturbine 303 einflutig ausgeführt ist.
Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 354, 357 auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung 363, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

Die Turbinenwelle 309 ist aus zwei Teilturbinenwellen 309a und 309b zusammengesetzt, die im Bereich des Lagers 318 fest miteinander verbunden sind.

Figur 8 zeigt in perspektivischer Ansicht eine Schaufel 120, 130, die sich entlang einer Längsachse 121 erstreckt.

Die Schaufel 120 kann eine Laufschaufel 120 oder Leitschaufel 130 einer Strömungsmaschine sein. Die Strömungsmaschine kann eine Gasturbine eines Flugzeugs oder eines Kraftwerks zur Elektrizitätserzeugung, eine Dampfturbine oder ein Kompressor sein.
Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe verwendet.
Die Schaufel 120, 130 kann hierbei durch ein Gussverfahren, auch mittels gerichteter Erstarrung, durch ein Schmiedeverfahren, durch ein Fräsverfahren gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung (bspw. mit dem erfindungsgemässen Verfahren) des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher (nicht dargestellt) auf.

Als Schutz gegen Korrosion weist die Schaufel 120, 130 beispielsweise entsprechende meistens metallische Beschichtungen (bspw. mit dem erfindungsgemässen Verfahren) auf und als Schutz gegen Wärme meistens noch eine keramische Beschichtung.

## Patentansprüche

1. Verfahren zur Gasphasenbeschichtung,
insbesondere zur lokalen Gasphasenbeschichtung,
eines Bauteils (1) mittels eines mehrkomponentigen Auftragsmittels (19), das
einen Aktivator und
ein Beschichtungsmaterial,
das zwei metallische Komponenten enthält,
die abgeschieden werden sollen,
wobei der Aktivator bei Erwärmung durch Reaktion mit zumindest einer Komponente des Auftragsmittels (19) eine Gasphase (13) bildet,
so dass das zumindest eine Beschichtungsmaterial das Bauteil (1) beschichtet,
wobei der Aktivator und das zumindest eine Beschichtungsmaterial eine Verbindung MeHa darstellen,
wobei Me ein Metall und Ha ein Halogen ist,
insbesondere Fluor,
das als Aktivator wirkt und
wobei das Auftragsmittel (19) zwei Beschichtungsmaterialien enthält,
die abgeschieden werden,
die ausgewählt werden aus der Gruppe
Aluminium und Kobalt,
Nickel und Kobalt,
Kobalt und Chrom oder
Aluminium und Chrom.

2. Verfahren nach Anspruch 1,
bei dem der Aktivator ein Halogen oder Halogenid ist.

3. Verfahren nach Anspruch 1 oder 2
bei dem das Verfahren unterhalb einer Schmelztemperatur des zumindest einen Beschichtungsmaterials durchgeführt wird.

4. Verfahren nach Anspruch 1,
bei dem das Verfahren zur Innenbeschichtung eines hohlen Bauteils (1') durchgeführt wird.

5. Verfahren nach Anspruch 1,
bei dem das Auftragsmittel (19) auf das Bauteil (1) aufgetragen wird, und
das Auftragsmittel (19) in einem weiteren Verfahrensschritt erwärmt wird,
so dass sich eine Gasphase (13) bildet,
die zur Gasphasenbeschichtung mit dem gewünschten Beschichtungsmaterials führt,
und bei dem in einem letzten Verfahrensschritt die Temperatur zum Stoppen der Reaktion erniedrigt wird,
und in einem der letzten Verfahrensschritte gegebenenfalls Reste des Auftragsmittels (19) entfernt werden.

6. Verfahren nach einem oder mehreren der vorherigen Ansprüche,
bei dem das Verfahren mit einem neu hergestellten Bauteil (1) durchgeführt wird.

7. Verfahren nach einem oder mehreren der vorherigen Ansprüche,
bei dem das Verfahren mit einem wieder aufzuarbeitenden Bauteil (1) durchgeführt wird.

8. Verfahren nach Anspruch 7,
bei dem das Bauteil (1, 1') ein Bauteil einer Dampf- (300, 303) oder Gasturbine (100),
insbesondere eine Turbinenschaufel (120, 130, 342, 354) oder eine Brennkammerauskleidung (155) ist.

## Claims

1. Process for vapour deposition coating,
in particular for local vapour deposition coating,
of a component (1) by means of a multicomponent application agent (19), which contains
an activator and
a coating material,
which contains two metallic components,
which are to be deposited,
the activator, on heating, forming a vapour phase (13) through reaction with at least one component of the application agent (19),
so that the at least one coating material coats the component (1),
the activator and the at least one coating material forming a compound MeHa,
where Me is a metal and Ha is a halogen,
in particular fluorine,
which acts as activator, and
the application agent (19) containing two coating materials,
which are deposited,
and which are selected from the group consisting of
aluminium and cobalt,
nickel and cobalt,
cobalt and chromium, or
aluminium and chromium.

2. Process according to Claim 1, in which the activator is a halogen or halide.

3. Process according to Claim 1 or 2, in which the process is carried out below a melting point of the at least one coating material.

4. Process according to Claim 1, in which the process is carried out in order to internally coat a hollow component (1') .

5. Process according to Claim 1, in which the application agent (19) is applied to the component (1), and
the application agent (19) in a further process step is heated,
so as to form a vapour phase (13),
which leads to the vapour deposition coating with the desired coating material,
and in which, in a final process step, the temperature is lowered in order to stop the reaction,
and if appropriate residues of the application agent (19) are removed in one of the final process steps.

6. Process according to one or more of the preceding claims, in which the process is carried out on a newly produced component (1).

7. Process according to one or more of the preceding claims, in which the process is carried out on a component (1) that is to be refurbished.

8. Process according to Claim 7,
in which the component (1, 1') is a component of a steam turbine (300, 303) or gas turbine (100),
in particular a turbine blade or vane (120, 130, 342, 354) or a combustion chamber lining (155).

## Revendications

1. Procédé de dépôt en phase gazeuse,
notamment pour le dépôt local en phase gazeuse,
d'un composant (1) à l'aide d'un agent (19) de dépôt à plusieurs constituants qui contient,
un activateur et
une matière de revêtement,
qui a deux constituants métalliques,
qui doivent être déposés,
l'activateur formant par échauffement, par réaction sur au moins un constituant de l'agent (19) de dépôt, une phase (13) gazeuse,
de sorte que la au moins une matière de revêtement recouvre le composant (1),
l'activateur et le au moins une matière de revêtement représentant une liaison MeHa,
Me étant un métal et Ha étant un halogène,
notamment le fluor,
qui sert d'activateur et,
l'agent (19) de dépôt contenant
deux matières de revêtement,
qui sont déposées,
qui sont choisies dans le groupe
de l'aluminium et du cobalt,
du nickel et du cobalt,
du cobalt et du chrome ou
de l'aluminium et du chrome.

2. Procédé suivant la revendication 1, dans lequel l'activateur est un halogène ou un halogénure.

3. Procédé suivant la revendication 1 ou 2, dans lequel on effectue le procédé en-dessous d'un point de fusion de la au moins une matière de revêtement.

4. Procédé suivant la revendication 1, dans lequel on effectue le procédé pour revêtir intérieurement un composant (1') creux.

5. Procédé suivant la revendication 1,
dans lequel on dépose l'agent (19) de dépôt sur l'élément (1), et
on échauffe l'agent (19) de dépôt dans un stade supplémentaire de procédé,
de manière à former une phase (13) gazeuse
qui donne le revêtement en phase gazeuse ayant la matière de revêtement souhaitée,
et dans lequel, dans le dernier stade du procédé, on abaisse la température pour arrêter la réaction et on élimine, dans l'un des stades finaux de procédés, le cas échéant des restes de l'agent (19) de dépôt.

6. Procédé suivant l'une ou plusieurs des revendications précédentes
dans lequel on effectue le procédé sur un composant (1) nouvellement produit.

7. Procédé suivant l'une ou plusieurs des revendications précédentes
dans lequel on effectue le procédé sur un composant (1) à retraiter.

8. Procédé suivant la revendication 7, dans lequel le composant (1, 1') est un composant d'une turbine à vapeur (300, 303) ou d'une turbine à gaz (100), notamment une aube (120, 130, 342, 354) de turbine ou un revêtement (155) de chambre de combustion.
